# FASCICULE DE BREVET EUROPEEN

(11) **EP 1 248 073 B1**
(45) Date de publication et mention de la délivrance du brevet: **12.04.2006**
(21) Numéro de dépôt: 01201247.2
(22) Date de dépôt: 03.04.2001
(51) Int. Cl.: G01B 21/04, G01B 5/008, G01B 5/012

(54) **Procédé de détermination de l'amplitude des déformations d'un stylet palpeur**
Verfahren zur Bestimmung der Grösse der Deformation eines Taststiftes
Method of determining the amplitude of the deformation of a stylus

(43) Date de publication de la demande: 09.10.2002
(73) Titulaire: Saphirwerk Industrieprodukte AG, 2555 Brügg (CH)
(72) Inventeur: Dubois, Daniel, 2503 Bienne (CH)
(74) Mandataire: Ravenel, Thierry Gérard Louis

(56) Documents cités:
- WO-A-00/60310
- DE-A- 3 933 575
- DE-A- 19 824 107
- US-A- 5 321 977
- US-A- 5 806 201

## Description

La présente invention concerne un procédé de caractérisation en flexion, en utilisation courante, d'un stylet palpeur utilisé sur une machine de mesure par contact, ladite machine comportant une tête de mesure mobile sur laquelle est monté solidairement ledit stylet palpeur, ce dernier comportant une tige de soutien portant à une première extrémité un élément de contact, et à la deuxième extrémité des moyens de connexion permettant d'assurer la liaison avec ladite tête de mesure.

On connaît la mesure de la déformation de stylets palpeurs particuliers. Ces stylets palpeurs comprennent une tige de mesure flexible dont la déformation est déterminée par des capteurs optiques (voir les documents DE 198 24 107 et WO 00/60310) ou par des extensomètres (voir le document DE 39 33 575).

On connaît également depuis longtemps l'utilisation d'un objet de référence permettant d'étalonner des machines-outil comportant une tête de mesure portant un stylet palpeur. En effet, l'utilisation d'un tel objet de référence dont les dimensions sont très précisément connues permet d'étalonner ladite tête de mesure par rapport aux mesures de coordonnées dans les trois dimensions de l'espace.

Toutefois, le type d'étalonnage ci-dessus décrit présente certaines incertitudes susceptibles de nuire à la précision des mesures ultérieures. En effet, l'étalonnage pratiqué dans l'art antérieur permet de fixer l'origine spatiale des mesures mais ne tient pas compte de certaines incertitudes, tel que les incertitudes attachées aux déformations du stylet palpeur qui s'ajoutent aux incertitudes inhérentes aux mesures. Le budget d'incertitude de mesure d'une telle machine s'en trouve ainsi augmenté, puisqu'il est calculé pour tenir compte de l'incertitude associée au résultat final, lorsque ladite incertitude est maximale. De ce fait, la moindre baisse de l'une des incertitudes intervenant dans un procédé de mesure entraîne une diminution du budget d'incertitude correspondant.

Les incertitudes portant sur les déformations du stylet palpeur sont très faibles, mais du fait de l'évolution rapide des technologies et de l'augmentation des précisions accessibles dans les procédés de fabrication et de mesures, il existe un besoin permanent de limiter autant que possible toutes les formes d'incertitudes.

Le stylet palpeur, est généralement composé de deux ou trois pièces qui sont des moyens de connexion, une tige de soutien et un élément de contact. Les incertitudes décrites ci-dessus proviennent de l'utilisation d'un élément de contact dont les caractéristiques géométriques ne sont pas idéales et des différentes méthodes utilisées pour l'assemblage des composants du stylet palpeur.

La méthode principalement utilisée actuellement pour assembler les composants de stylets palpeurs est le collage. Toutefois, le collage présente un inconvénient en ce que la distribution de la colle sur les deux surfaces à coller avant l'assemblage ne peut être contrôlée de façon fiable. Ainsi l'orientation des différents composants du stylet palpeur les uns par rapport aux autres varie d'un stylet à l'autre, de même que la qualité du collage. Par conséquent, le comportement dynamique de deux stylets, a priori identiques, ne sera pas le même, plus particulièrement en ce qui concerne la flexion.

La présente invention a donc pour but principal de pallier les inconvénients de l'art antérieur susmentionné en fournissant un procédé permettant de tenir compte des déformations du stylet palpeur pendant le cycle de mesure.

A cet effet, l'invention a pour objet un procédé de caractérisation en flexion, en utilisation courante, d'un stylet palpeur utilisé sur une machine de mesure par contact, ladite machine comportant une tête de mesure mobile sur laquelle est monté solidairement ledit stylet palpeur, ce dernier comportant une tige de soutien portant à une première extrémité un élément de contact, et à la deuxième extrémité des moyens de connexion permettant d'assurer la liaison avec ladite tête de mesure, ledit procédé comportant les étapes consistant à:
a) fixer ledit stylet palpeur sur un support fixe par lesdits moyens de connexion,
b) appliquer une force sur un point d'application situé sur une première partie dudit stylet palpeur,
c) mesurer le déplacement effectué par ladite première partie dudit stylet palpeur à l'aide d'un premier dispositif de mesure,
d) répéter les étapes b) et c) une pluralité de fois en changeant à chaque fois les points d'application de la force et de mesure correspondant, de façon à obtenir une distribution radiale de la valeur de ladite flexion subie par ledit stylet palpeur,
e) fournir une représentation des résultats des mesures obtenues par la mise en oeuvre des étapes a) à d).

Dans un mode de réalisation préféré, la force est appliquée sur une première partie de l'élément de contact, tandis que ledit dispositif de mesure est disposé sur une seconde partie dudit élément de contact, située en vis-à-vis de ladite première partie. En outre, dans le cas où ledit outil de mesure est un stylet palpeur dont l'élément de contact est une bille, l'étape b) ci-dessus consiste à appliquer une pression sur un premier point situé sensiblement sur l'équateur de ladite bille, tandis que le déplacement correspondant de la bille est mesuré, à l'aide d'un comparateur, à proximité d'un second point de ladite bille diamétralement opposé audit premier point. De ce fait, l'étape c) ci-dessus consiste alors à calculer la flexion subie par le stylet palpeur dans des conditions proches des conditions réelles d'utilisation.

En outre, on peut préférentiellement répéter les étapes b) à c) ci-dessus une pluralité de fois, pour pouvoir déterminer la flexion dudit stylet palpeur dans toutes les directions et obtenir ainsi une distribution radiale de la flexion, permettant de connaître complètement le comportement dynamique dudit stylet.

On peut de plus utiliser un second comparateur pendant les étapes de mesure permettant de déterminer les déplacements des moyens de connexion dudit stylet par rapport au support et par rapport à l'élément de contact.

De même, on peut utiliser un troisième comparateur permettant de déterminer les déplacements de l'extrémité de ladite tige de soutien située à proximité de l'élément de contact, notamment par rapport à l'élément de contact lui-même. De cette façon on peut avoir une connaissance précise, complète et détaillée du comportement dynamique du stylet palpeur. Ceci permet avantageusement de déterminer plus précisément qu'à l'heure actuelle quelles sont les incertitudes mises en jeu au niveau de la tête de mesure et donc de diminuer fortement le budget d'incertitude de cette dernière. Il est bien entendu que dans ce cas de figure, plus on souhaite effectuer de mesures sur un stylet, plus il est avantageux de recourir à une automatisation du procédé.

Par conséquent, le fabricant de tels stylets de mesure peut définir le comportement dynamique de chaque stylet qu'il commercialise et fournir un certificat garantissant à son client le niveau des incertitudes associées audit stylet. L'utilisateur peut ainsi combiner ces informations avec celles obtenues ultérieurement lors de la mesure de l'objet de référence, pour définir exactement le niveau d'incertitude globale de sa machine-outil.

L'invention sera exposée plus en détail à l'aide de la description suivante d'un exemple d'exécution faite en référence aux dessins annexés dans lesquels:
- la figure 1 est une vue de dessus simplifiée, dont une partie est en coupe, d'un stylet palpeur monté sur un support, en vue de la mise en oeuvre du procédé selon l'invention;
- la figure 2 est une vue de dessus simplifiée du stylet palpeur de la figure 1, ledit stylet étant déformé, de façon volontairement exagérée pour des raisons de clarté, pendant une étape de mesure du procédé selon l'invention;
- la figure 3 est exemple de diagramme représentant l'amplitude des déplacements effectués par l'élément de contact par rapport à sa position de repos, obtenu par la mise en oeuvre du procédé selon l'invention.

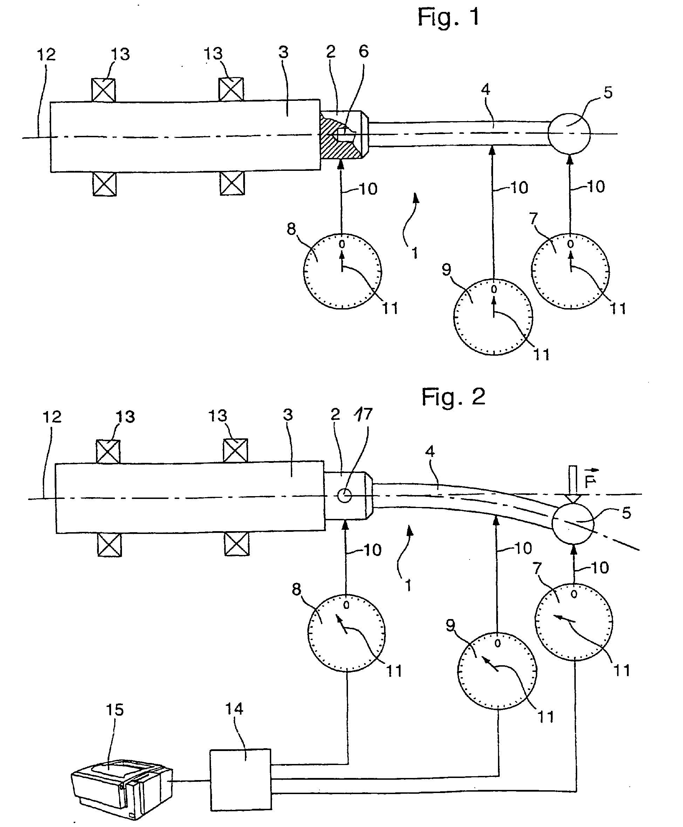

On distingue sur la figure 1 les trois composants du stylet palpeur 1, à savoir les moyens de connexion 2, reliés ici à un support 3 de position fixe dont seulement une partie est visible, la tige de soutien 4 et l'élément de contact 5, ici une bille.

Il est bien entendu qu'une fois le calibrage selon l'invention effectué, ledit stylet palpeur peut être utilisé pour effectuer des mesures et est par conséquent disposé sur une tête de mesure (non représentée) en lieu et place dudit support fixe 3.

De préférence, les moyens de connexion 2 ainsi que la tige de soutien 4 sont réalisés en un matériau dur et léger tel qu'un cermet, du carbure de tungstène par exemple. Ces matériaux permettent en effet d'avoir un stylet présentant des bonnes propriétés mécaniques de rigidité et de légèreté, indispensables respectivement pour la précision et pour la rapidité des mesures.

L'assemblage de ces deux parties est préférentiellement réalisé par soudage laser ou par frettage. Les moyens de connexion 2 sont de type classique, tel qu'une pièce cylindrique portant d'un côté un filetage extérieur destiné à réaliser la liaison avec la tête de mesure, ici le support fixe 3, et de l'autre côté un alésage destiné à réaliser la liaison 6 avec la tige de soutien 4. On constate également que lesdits moyens de connexion 2 comportent deux trous 17 (dont un seul est visible sur la figure 2) servant de prises pour faciliter le serrage sur le support fixe 3 ou sur une tête de mesure.

En outre, la bille 5 doit aussi être réalisée en un matériau dur et léger pour les raisons précitées, c'est pourquoi on utilise de préférence une céramique ou du corindon. Ces matériaux présentent de plus une bonne résistance à l'usure par frottement, ce qui est également indispensable pour la réalisation d'un élément de contact. Ladite bille 5 est fixée sur la tige de soutien 4 par collage ou par brasage, ces techniques étant à la fois courantes et peu onéreuses. Le collage dans ce cas pose moins de difficultés que pour l'assemblage de la tige de soutien 4 sur les moyens de connexion 2, dans la mesure où les deux surfaces à coller sont facilement accessibles, ce qui permet ainsi un bon contrôle de la répartition de la colle.

On peut encore imaginer d'autres modes de réalisation du stylet palpeur 1, tel que recourir à un ensemble tige de soutien 4 - moyens de connexion 2 fabriqué d'une seule pièce. De même, on pourra recourir à d'autres matériaux appropriés pour la fabrication de la bille 5.

Trois comparateurs 7, 8 et 9 sont en outre représentés de façon schématique sur la figure 1, ainsi qu'une flèche au-dessus de chacun desdits comparateurs symbolisant l'élément palpeur mobile 10 qui actionne l'aiguille 11 dudit comparateur. L'application d'une pression sur ledit palpeur mobile 10 engendre un déplacement de ladite aiguille 11 et la mesure dudit déplacement.

Pour mettre en oeuvre le procédé selon l'invention, ledit stylet 1 est fixé au support fixe 3, tel que visible sur la figure 1. On exerce alors une pression d'une valeur d'environ 3 Newton, par exemple, sur un premier point de ladite bille 5 proche de son équateur. Cette pression correspond à la valeur de la pression que subit ledit stylet 1 pendant un cycle de mesures courantes. Dans un même temps, le comparateur 7 disposé préalablement à l'application de ladite pression sur un second point de la bille 5, en vis-à-vis dudit premier point, mesure le déplacement de la bille 5 provoqué par ladite pression.

Cette première mesure permet de déterminer la déformation totale en flexion du stylet 1 en cours de fonctionnement, plus précisément la déformation en flexion qui intervient entre la bille 5 et le support de la tête de mesure 3.

Dans un mode de réalisation préféré de l'invention, on utilise un second comparateur 8 disposé sur un point de la périphérie des moyens de connexion 2 situé dans le plan médian dudit stylet 1 défini par lesdits deux points de ladite bille 5, du côté dudit second point. Ledit second comparateur 8 permet de mesurer le déplacement desdits moyens de connexion 2 provoqué par l'application de ladite pression. On peut alors en déduire la déformation en flexion du stylet 1, intervenant entre la bille 5 et les moyens de connexion 2.

Dans un autre mode de réalisation préféré de l'invention, on utilise un troisième comparateur 9 disposé sur un point de la périphérie de la tige de soutien 4 situé dans ledit plan médian du côté dudit second point et à proximité de la bille 5. Ledit troisième comparateur 9 permet de mesurer le déplacement de l'extrémité correspondante de ladite tige 4 provoquée par l'application de ladite pression.

D'une manière générale et en pratique, le procédé ne se limite pas aux mesures décrites ci-dessus mais consiste plutôt en une répétition de l'ensemble de ces mesures, en changeant de plan médian à chaque nouvel ensemble de mesures, le passage d'un plan médian au suivant consistant en une rotation d'un angle α = 360/x autour de l'axe de symétrie 12 du stylet 1, où x correspond au nombre de mesures souhaitées.

Bien entendu, la multiplication des mesures entraîne une augmentation de la durée de mise en oeuvre du procédé selon l'invention, c'est pourquoi il est préférable dans ce cas d'automatiser ledit procédé. On peut par exemple disposer le support 3 sur un montage tournant symbolisé par les roulements à billes 13 sur les figures 1 et 2, et le faire ainsi tourner grâce à une unité de commande (non représentée), soit de façon discontinue avec un pas de rotation réglable α, soit de façon continue. Dans un même temps, on peut relier les comparateurs à un dispositif électronique de mesure et de traitement des résultats tel un ordinateur, désigné par la référence 14 sur la figure 2. On peut en outre prévoir de relier ledit dispositif électronique 14 à une imprimante 15 qui imprimera des rapports de mesure par exemple sous forme d'un diagramme.

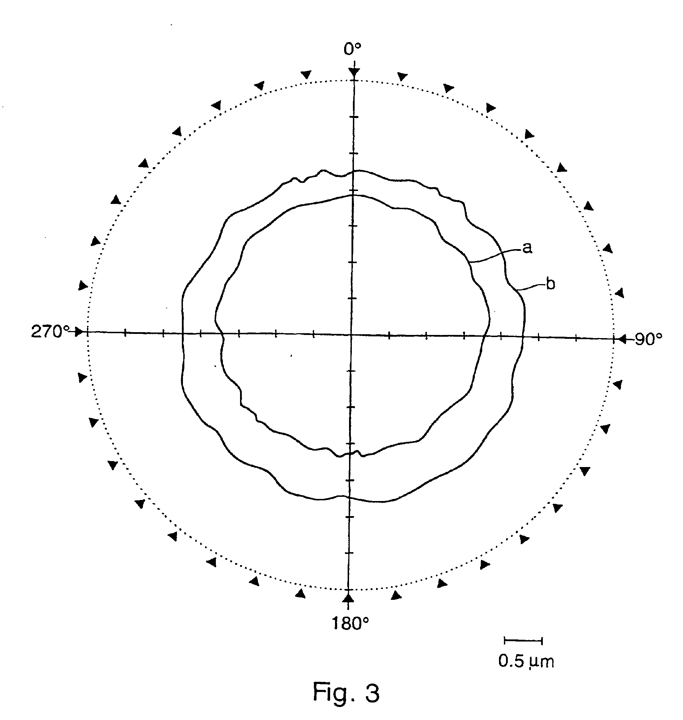

De cette façon le fabricant de stylets peut obtenir et fournir à ses clients des fiches d'information sur la flexion du stylet dans toutes les directions par rapport à son axe de symétrie. Un exemple du type de présentation réalisable dans ce but est représenté sur la figure 3. On y distingue une première courbe référencée a représentant l'écart de sphéricité de l'élément de contact 5, par rapport à une sphère parfaite de rayon égal au rayon moyen dudit élément de contact 5, et mesuré sur sa périphérie équatoriale en partant d'une position de départ correspondant au zéro du diagramme. La seconde courbe, référencée b, correspond à une représentation des résultats des mesures obtenues par la mise en oeuvre du procédé selon l'invention. Chaque point de la courbe b représente, pour un angle donné par rapport à ladite position de départ, l'amplitude du déplacement effectué par l'élément de contact par rapport à sa position au repos. Dans l'exemple représenté ici, on a effectué 36 mesures, symbolisées par de petites flèches, le stylet 1 ayant tourné de 10 degrés entre chacune desdites mesures. La courbe b a ensuite été obtenue par des calculs d'extrapolation effectués par le dispositif électronique 15.

La dernière variante décrite permet avantageusement de déterminer précisément le comportement du stylet pendant un cycle de mesures. En particulier, elle permet de connaître le comportement complet des différents composants du stylet 1 les uns par rapport aux autres, en plus du comportement global dudit stylet, notamment en flexion. Cette connaissance permet au fabricant de stylets de renseigner précisément son client utilisateur desdits stylets quant aux incertitudes à prendre en compte pour le calcul du budget d'incertitude. Le fabricant peut éventuellement commercialiser chacun desdits stylets avec un certificat attestant de l'étalonnage dynamique et garantissant ainsi pour chaque stylet un certain niveau d'incertitude à ses clients. Une certification de ce type permet à l'utilisateur d'un tel stylet de connaître exactement les incertitudes sur la géométrie dudit stylet dont il doit tenir compte pour calculer son budget d'incertitude.

La description qui précède correspond à des modes de réalisation préférés de l'invention et ne saurait en aucun cas être considérée comme limitative. Le fabricant de stylets pourra par exemple juger lui-même, au cas par cas, du nombre de mesures à effectuer sur un stylet pour obtenir des informations représentatives du comportement dudit stylet. En outre, le mode d'assemblage décrit pour les différents composants du stylet correspond au mode préféré, mais le procédé selon l'invention est applicable à tous les types de stylets.

## Revendications

1. Procédé de caractérisation en flexion, en utilisation courante, d'un stylet palpeur (1) utilisé sur une machine de mesure par contact, ladite machine comportant une tête de mesure mobile sur laquelle est monté solidairement ledit stylet palpeur (1), ce dernier comportant une tige de soutien (4) portant à une première extrémité un élément de contact (5), et à la deuxième extrémité des moyens de connexion (2) permettant d'assurer la liaison avec ladite tête de mesure, ledit procédé comportant les étapes consistant à:
a) fixer ledit stylet palpeur (1) sur un support (3) fixe par lesdits moyens de connexion (2),
b) appliquer une force sur un point d'application situé sur une première partie dudit stylet palpeur (1),
c) mesurer le déplacement effectué par ladite première partie dudit stylet palpeur (1) à l'aide d'un premier dispositif de mesure (7),
d) répéter les étapes b) et c) une pluralité de fois en changeant à chaque fois les points d'application de la force et de mesure correspondant, de façon à obtenir une distribution radiale de la valeur de ladite flexion subie par ledit stylet palpeur (1),
e) fournir une représentation des résultats des mesures obtenues par la mise en oeuvre des étapes a) à d).

2. Procédé selon la revendication 1, **caractérisé en ce que** dans l'étape b) ladite première partie sur laquelle ladite force est appliquée est située sur ledit élément de contact (5).

3. Procédé selon la revendication 2, **caractérisé en ce que**, lors de la mise en oeuvre de l'étape c) de la revendication 1, la mesure de la flexion comprend la mesure du déplacement d'une seconde partie de l'élément de contact (5).

4. Procédé selon la revendication 3, **caractérisé en ce que** ladite seconde partie est située en vis-à-vis de ladite première partie.

5. Procédé selon la revendication 4, dans lequel ledit élément de contact (5) est une bille, **caractérisé en ce que** ladite première partie correspond à un premier point sensiblement situé sur l'équateur de ladite bille (5), ladite seconde partie étant un second point diamétralement opposé audit premier point, **en ce que** ladite force est une pression, **en ce que** ladite flexion est radiale et **en ce que** ledit dispositif de mesure (7) est un comparateur.

6. Procédé selon l'une quelconque des revendications précédentes, **caractérisé en ce que** ladite représentation des résultats des mesures se présente sous la forme d'un certificat.

7. Procédé selon la revendication 6, **caractérisé en ce que** ledit certificat comprend un diagramme représentatif de la distribution radiale de l'amplitude des flexions subies par ledit stylet palpeur (1) lors de la mise en oeuvre des étapes a) à d).

8. Procédé selon l'une des revendications précédentes, **caractérisé en ce que** la valeur de ladite force est sensiblement égale à la valeur de la force moyenne subie par ledit stylet palpeur (1) au cours d'un cycle de mesure courant.

9. Procédé selon l'une des revendications précédentes, **caractérisé en ce que** pendant la mise en oeuvre de l'étape c) de la revendication 1, un second dispositif de mesure (8) est utilisé pour mesurer le déplacement desdits moyens de connexion (2).

10. Procédé selon l'une des revendications précédentes, **caractérisé en ce que** pendant la mise en oeuvre de l'étape c) de la revendication 1, un troisième dispositif de mesure (9) est utilisé pour mesurer le déplacement de ladite première extrémité de la tige de soutien (4) située à proximité dudit élément de contact (5).

## Patentansprüche

1. Verfahren zum Biegekennzeichnen eines Fühler-Stiletts (1), das an einer Maschine zum Messen durch Kontakt verwendet wird, bei laufender Verwendung, wobei die Maschine einen beweglichen Messkopf aufweist, an dem das Fühler-Stilett (1) fest angebracht ist, wobei dieses letztere einen Haltestift (4) aufweist, der an einem ersten Ende ein Kontaktelement (5) und an dem zweiten Ende Verbindungsmittel (2), die die Sicherstellung der Verbindung mit dem Messkopf ermöglichen, trägt, wobei das Verfahren die Schritte umfasst, die darin bestehen:
a) das Fühler-Stilett (1) durch die Verbindungsmittel (2) an einem festen Träger (3) zu befestigen,
b) auf einen Ausübungspunkt, der sich an einem ersten Teil des Fühler-Stiletts (1) befindet, eine Kraft auszuüben,
c) die durch den ersten Teil des Fühler-Stiletts (1) ausgeführte Verlagerung mit Hilfe einer ersten Messvorrichtung (7) zu messen,
d) die Schritte b) und c) mehrmals zu wiederholen, indem jedesmal die Ausübungspunkte der entsprechenden Kraft und der Messung geändert werden, derart, dass eine radiale Verteilung des Wertes der Biegung, der das Fühler-Stilett (1) unterworfen wird, erhalten wird,
e) eine Darstellung der durch die Ausführung der Schritte a) bis d) erhaltenen Messergebnisse zu liefern.

2. Verfahren nach Anspruch 1, **dadurch gekennzeichnet, dass** sich im Schritt b) der erste Teil, auf den die Kraft ausgeübt wird, an dem Kontaktelement (5) befindet.

3. Verfahren nach Anspruch 2, **dadurch gekennzeichnet, dass** bei der Ausführung des Schrittes c) von Anspruch 1 die Messung der Biegung das Messen der Verlagerung eines zweiten Teils des Kontaktelements (5) umfasst.

4. Verfahren nach Anspruch 3, **dadurch gekennzeichnet, dass** sich der zweite Teil gegenüber dem ersten Teil befindet.

5. Verfahren nach Anspruch 4, bei dem das Kontaktelement (5) eine Kugel ist, **dadurch gekennzeichnet, dass** der erste Teil einem ersten Punkt entspricht, der sich im Wesentlichen auf dem Äquator der Kugel (5) befindet, während der zweite Teil ein zweiter Punkt ist, der sich diametral gegenüber dem ersten Punkt befindet, dass die Kraft eine Druckkraft ist, dass die Biegung radial ist und dass die Messvorrichtung (7) ein Komparator ist.

6. Verfahren nach einem der vorhergehenden Ansprüche, **dadurch gekennzeichnet, dass** sich die Darstellung der Messergebnisse in der Form eines Zertifikats darstellt.

7. Verfahren nach Anspruch 6, **dadurch gekennzeichnet, dass** das Zertifikat ein Diagramm umfasst, das die radiale Verteilung der Amplitude der Biegungen, denen das Fühler-Stilett (1) bei der Ausführung der Schritte a) bis d) unterworfen wird, darstellt.

8. Verfahren nach einem der vorhergehenden Ansprüche, **dadurch gekennzeichnet, dass** der Wert der Kraft im Wesentlichen gleich dem Wert der mittleren Kraft ist, der das Fühler-Stilett (1) im Verlauf eines momentanen Messzyklus unterworfen wird.

9. Verfahren nach einem der vorhergehenden Ansprüche, **dadurch gekennzeichnet, dass** während der Ausführung des Schrittes c) von Anspruch 1 eine zweite Messvorrichtung (8) verwendet wird, um die Verlagerung der Verbindungsmittel (2) zu messen.

10. Verfahren nach einem der vorhergehenden Ansprüche, **dadurch gekennzeichnet, dass** während der Ausführung des Schrittes c) von Fig. 1 eine dritte Messvorrichtung (9) verwendet wird, um die Verlagerung des ersten Endes des Haltestifts (4), das sich in der Nähe des Kontaktelements (5) befindet, zu messen.

## Claims

1. Method for determining, in common use, the bending of a touch probe (1) used on a contact measuring machine, said machine including a mobile measuring head on which said touch probe (1) is fixedly mounted, the latter including a support rod (4) carrying a contact element (5) at a first end, and connection means (2) assuring the link with said measuring head at the second end, said method including the steps of:
a) fixing said touch probe (1) onto a support (3) by said connecting means (2),
b) applying a force to a point of application located on a first part of said touch probe (1),
c) measuring the deflection magnitude undergone by said first part of said touch probe (1) using a first measuring device (7),
d) repeating steps a) to c) a plurality of times, each time changing the points of application of the force and corresponding measurement, so as to obtain a radial distribution of the value of said bending which said touch probe (1) undergoes,
e) providing a representation of the measurement results obtained by implementing steps a) to d).

2. Method according to claim 1, **characterised in that**, in step b), said first part onto which said force is applied is located on said contact element (5).

3. Method according to claim 2, **characterised in that**, when step c) of claim 1 is being implemented, the bending measurement includes measurement of the deflection magnitude of a second part of the contact element (5).

4. Method according to claim 3, **characterised in that** said second part is located opposite said first part.

5. Method according to claim 4, wherein said contact element (5) is a ball, **characterised in that** said first part corresponds to a first point substantially located on the equator of said ball (5), said second part being a second point diametrically opposite said first point, **in that** said force is an application of pressure, **in that** said bending is radial and **in that** said measuring device (7) is a comparator.

6. Method according to any one of the preceding claims, **characterised in that** said representation of the measurement results takes the form of a certificate.

7. Method according to claim 6, **characterised in that** said certificate includes a representative diagram of the radial distribution of the amplitude of the bendings undergone by said touch probe (1) during implementation of steps a) to d).

8. Method according to any one of the preceding claims, **characterised in that** the value of said force is substantially equal to the value of the mean force which said touch probe (1) undergoes during a conventional measuring cycle.

9. Method according to any one of the preceding claims, **characterised in that**, during implementation of step c) of claim 1, a second measuring device (8) is used to measure the deflection magnitude of said connecting means (2).

10. Method according to any one of the preceding claims, **characterised in that**, during implementation of step c) of claim 1, a third measuring device (9) is used to measure the deflection magnitude of said first end of the support rod (4) located in proximity to said contact element (5).
